# EUROPEAN PATENT APPLICATION

(11) **EP 1 176 700 A2**
(43) Date of publication of application: **30.01.2002**
(21) Application number: 01118357.1
(22) Date of filing: 27.07.2001
(51) Int. Cl.: H02K 15/03

(54) **Embedded magnet type rotor, manufacturing method and mold device**

(30) Priority: 27.07.2000 JP 2000226285
(71) Applicant: YAMAHA HATSUDOKI KABUSHIKI KAISHA, Iwata-shi Shizuoka-ken (JP)
(72) Inventor: Ishihara, Hiroyuki, Iwata-Shi, Shizuoka-ken (JP); Kaneko, Kazuyoshi, Iwata-Shi, Shizuoka-ken (JP); Naito, Shinya, Iwata-Shi, Shizuoka-ken (JP)
(74) Representative: Grünecker, Kinkeldey, Stockmair & Schwanhäusser Anwaltssozietät

(57) **Abstract**

An embedded magnet type rotor with and mold device for making an embedded magnet type rotor a rotor core provided with a rotor core fitting section engageable with a manufacturing device fitting section formed in a manufacturing device for use in an orientating and/or a magnetizing process of said resinous magnet. A method of making an embedded magnet type rotor with a rotor core, wherein resinous magnet is filled in the slits provided in the rotor core, and at least one pin is inserted in at least one slit when said resinous magnet is filled in.

## Description

This invention relates to an embedded magnet type rotor with a rotor core, a mold device for making an embedded magnet type rotor and a method of making an embedded magnet type rotor.

Heretofore, an embedded magnet type rotor has been known in which anisotropic resinous magnet is filled in arcuate slits provided in a cylindrical rotor core, circumferentially in regular intervals.

In manufacturing the conventional embedded magnet type rotor, a metallic mold consisting of an upper and a lower die is used for filling the resinous magnet. The lower die has permanent magnets disposed along the outside circumference of the rotor core at intervals the same as those of the slits, and ferromagnetic materials disposed between the permanent magnets, while the upper die is placed on the top of the lower die and has gates through which the resinous magnet is filled in the slits.

The rotor core is loaded on the lower die, with ends of the arcuate slits directed toward the magnets; resinous magnet is filled in the slits while magnetically orientated, and then the filled resinous magnet is magnetized using a magnetizing device.

However, since an embedded magnet type rotor has magnetic saliency, in the conventional embedded magnet type rotor, on the rotor core loaded on the metallic mold is exerted a rotation force due to saliency of the magnets of the metallic mold and the rotor core, which may cause rotation of the rotor core within the metallic mold with the result that the gates of the upper die and the slits of the rotor core are displaced, and the flow of the resinous magnet in the slits may change during filling, resulting in defective filling of the resinous magnet in the slits.

Even if the resinous magnet can be filled in the slits without trouble, displacement of the rotor core from the initial position during loading will prevent proper orientation of the resinous magnet, resulting in a high rate of misorientation. In addition, reluctance torque due to a magnetization current is produced in a magnetizing process, which may cause rotation of the rotor core within the magnetizing device, resulting in high defective rate of magnetization.

The problem in magnetization is not limited to anisotropic resinous magnet, but the same trouble is found in isotropic resinous magnet as well.

It is an objective of the present invention to provide an embedded magnet type rotor, a mold device for making an embedded magnet type rotor and a method of making an embedded magnet type rotor, wherein rotation of the rotor core within a manufacturing device is prevented.

According to a first aspect of the present invention, said objective is solved by an embedded magnet type rotor according to claim 1.

According to a second aspect of the present invention, said objective is solved by a mold device for making an embedded magnet type rotor according to claim 4.

According to a method aspect of the present invention, said objective is solved by a method of making an embedded magnet type rotor according to claim 8.

Preferred embodiments are laid down in the respective dependent claims.

Such an embedded magnet type rotor with a rotor core can be use in a rotary electric device such as an electric motor, a generator, or the like. Particularly, such an embedded magnet type rotor made by a process in which resinous magnet is filled in slits provided in a rotor core such as a laminated iron core.

In the following, the present invention is explained in greater detail with respect to several embodiments thereof in conjunction with the accompanying drawings, wherein:
- Fig. 1: shows views of a first embodiment of the embedded magnet type rotor; (a) is a plan view, and (b) is a sectional view taken along line A-A of (a);
- Fig. 2: shows views of a metallic mold for use in manufacturing the embedded magnet type rotor; (a) is a sectional view taken along line B-B of (b) in which the upper die is mounted, and (b) is a plan view, with the upper die removed;
- Fig. 3: is a view showing a second embodiment of the embedded magnet type rotor, a plan view similar to Fig. 2(b);
- Fig. 4: is a view showing a third embodiment of the embedded magnet type rotor, a sectional view similar to Fig. 2(a);
- Fig. 5: is a view showing a fourth embodiment of the embedded magnet type rotor, a sectional view similar to Fig. 2 (a); and
- Fig. 6: shows views of a fifth embodiment of the embedded magnet type rotor; like Fig. 2, (a) is a sectional view taken along line C-C of (b) in which the upper die is mounted, and (b) is a plan view, with the upper die removed.

Now, a first embodiment of the embedded magnet type rotor will be described with reference to the drawings.

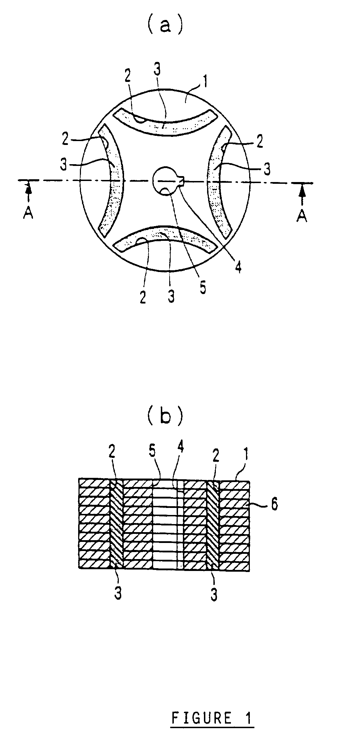

Fig. 1 shows views of a first embodiment of the embedded magnet type rotor; (a) is a plan view, and (b) is a sectional view taken along line A-A of (a). Fig. 2 shows views of a metallic mold for use in manufacturing the embedded magnet type rotor; (a) is a sectional view, and (b) is a plan view, with the upper die removed. Fig. 2(a) corresponds to a sectional view taken along line B-B of (b) in which the upper die is mounted.

As shown in Fig. 1(a), the embedded magnet type rotor of this embodiment is comprised of a rotor core 1, and anisotropic resinous magnet 3 filled in slits 2 provided in the rotor core 1.

The rotor core 1, as shown in Fig. 1(b), is formed of laminated electromagnetic steel plates, of a disc-like shape, each having a punched-out key hole-like shaft hole 5 with a recess 4 and slits 2, and has a cylindrical shape, as a whole, with a shaft hole 5 and slits 2 therethrough in the axial direction.

The slits 2 are formed in the shape of an arc in the rotor core 1 circumferentially at regular intervals, and resinous magnet 3 is filled therein.

In filling the resinous magnet 3, a metallic mold 7 is used, as shown in Fig. 2(a), which is comprised of an upper die 8, an intermediate die 9, and a lower die 10.

The upper die 8 has gates 11 through which the resinous magnet 3 is injected into the slits 2 of the rotor core 1; and the intermediate die 9, as shown in Fig. 2(b), is provided, at its center, with a space in which the rotor core 1 is loaded, and has permanent magnets 12 disposed, along the outside circumference of the rotor core 1 loaded in the space, at intervals the same as those of the slits 2, ferromagnetic materials 13 between the permanent magnets 12, and a nonmagnetic material surrounding the permanent magnets 12 and the ferromagnetic materials 13.

In the intermediate die 9, as shown in Fig. 2(a), is inserted from below a key-shaped core pin 16 formed with a projecting portion 15, engageable with the recessed portion 4 of the rotor core, along the axial line, which core pin 16 is adapted to be inserted into the rotor core 1 loaded on the intermediate die 9, so that rotation of the rotor core 1 within the metallic mold 7 can be prevented, and as shown in Fig. 2(b), the rotor core 1 can be held in place in the mold, with ends of the arcuate slits 2 directed toward the permanent magnets 12 for orientation and magnetization.

The lower die 10, as shown in Fig. 2(a), is formed in the shape of a flat plate, and adapted to support the upper die 8, intermediate die 9, and core pin 16 on its top.

The metallic mold 7 is arranged such that it is provided with pin holes 18 through which ejector pins 17 can be inserted therein from below, and the tips of the ejector pins 17 are brought into abutment against the bottom of the rotor core 1 loaded on the intermediate die 9.

With the construction of the metallic mold 7 described above, the resinous magnet 3 is injected into the slits 2 of the rotor core 1 loaded on the intermediate die 9 while magnetically orientated.

Now, the procedure will be described of filling the resinous magnet 3 in the slits 2 of the rotor core 1 using the metallic mold 7.

First, as shown in Fig. 2(b), the core pin 16 is inserted in the shaft hole 5 of the rotor core 1 to load the rotor core 1 on the intermediate die 9 with the ends of the arcuate slits 2 directed toward the permanent magnets 12 of the metallic mold 7, and as shown in Fig. 2(a), the tips of the ejector pins 17 are brought into abutment against the bottom of the rotor core 1.

Then, the upper die 8 is placed on the top of the intermediate die 9 and thereafter, the resinous magnet 3 is injected into the slits 2 of the rotor core 1 from the gates 11 of the upper die 8 while magnetically orientated by the permanent magnets 12 of the metallic mold 7.

After the resinous magnet 3 injected into the slits 2 has been solidified, the upper die 8 is removed from the top of the intermediate die 9, and the rotor core 1 is pushed up with the ejector pins 17 to take out the rotor core 1 from the intermediate die 9.

As described above, as a result of magnetic orientation being performed with the projecting portion 15 of the core pin 16 fitted in the recessed portion 4 of the rotor core 1, rotation of the rotor core 1 within the metallic mold 7 can be prevented, so that the resinous magnet 3 can be filled in the slits 2 without trouble, and the resinous magnet 3 filled in the slits 2 can be orientated reliably, providing a reduced defective rate.

In the foregoing embodiment, although the metallic mold 7 for use in a process in which the resinous magnet is filled while magnetically orientated, is exemplified as a manufacturing device, the manufacturing device may be one for use in a process in which magnets embedded in a rotor core are magnetized, in which case, rotation of the rotor core 1 due to a magnetization current can also be prevented.

Fig. 3 is a view showing a second embodiment of the embedded magnet type rotor, a plan view similar to Fig. 2(b). Like parts as in the first embodiment are designated by like numerals.

As shown in Fig. 3, the arrangement of this embodiment is different from that of the first embodiment in that in the outside circumferential surface of the rotor core 1 are provided a plurality of grooves 4a running from one end of the rotor core 1 to the other end, as recessed portions, and on the inside circumferential surface of the ferromagnetic materials 13 of the intermediate die 9, are provided a plurality of ribs 15a engageable with the grooves 4a.

The function and the effect of this embodiment are the same as those of the first embodiment.

Fig. 4 is a view showing a third embodiment of the embedded magnet type rotor, a sectional view similar to Fig. 2 (a). Like parts as in the first embodiment are designated by like numerals.

As shown in Fig. 4, the arrangement of this embodiment is different from that of the first embodiment in that in one end of the rotor core 1 is provided a hole 4b as a recessed portion, and a projection 15b is provided on the bottom of the cavity of the intermediate die 9.

The function and the effect of this embodiment are the same as those of the first embodiment.

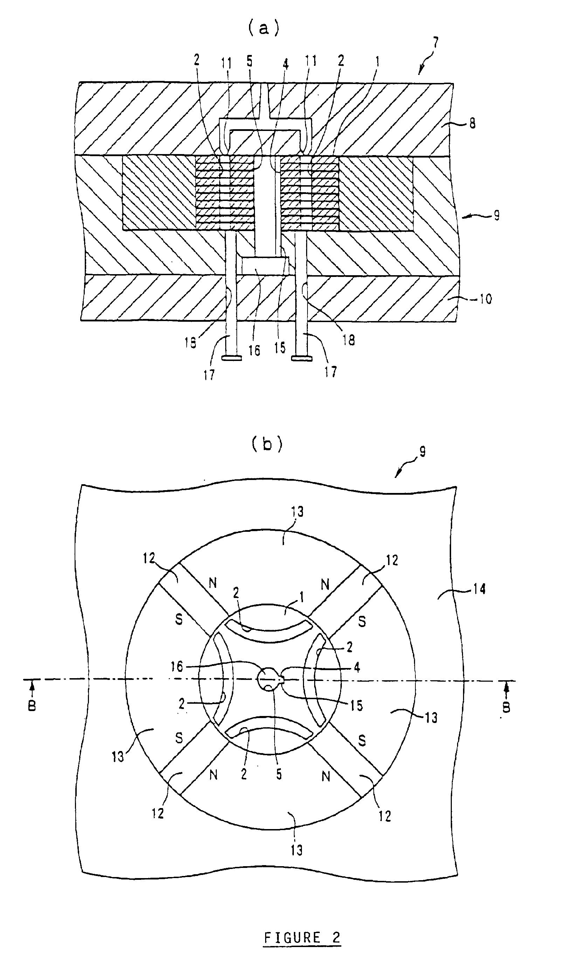

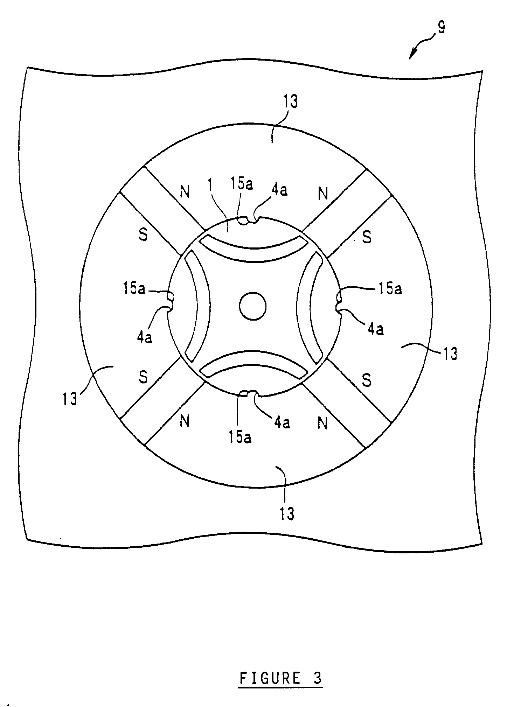

Fig. 5 is a view showing a fourth embodiment of the embedded magnet type rotor, a sectional view similar to Fig. 2(a). Like parts as in the first embodiment are designated by like numerals.

As shown in Fig. 5, the arrangement of this embodiment is different from those of the foregoing embodiments in that instead of a recessed portion provided directly in the rotor core, a shaft 19 provided, at one end, with a groove 4c as a recessed portion, is press fitted into the shaft hole 5 of the rotor core 1, and in the bottom of the cavity of the intermediate die 9 is formed a hole 20 with a rib 15c engageable with the groove 4c of the shaft 19.

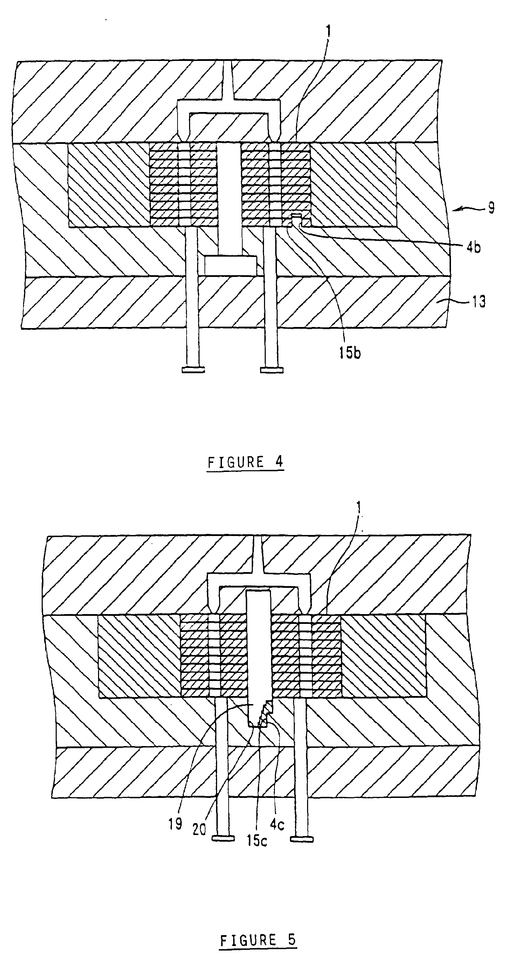

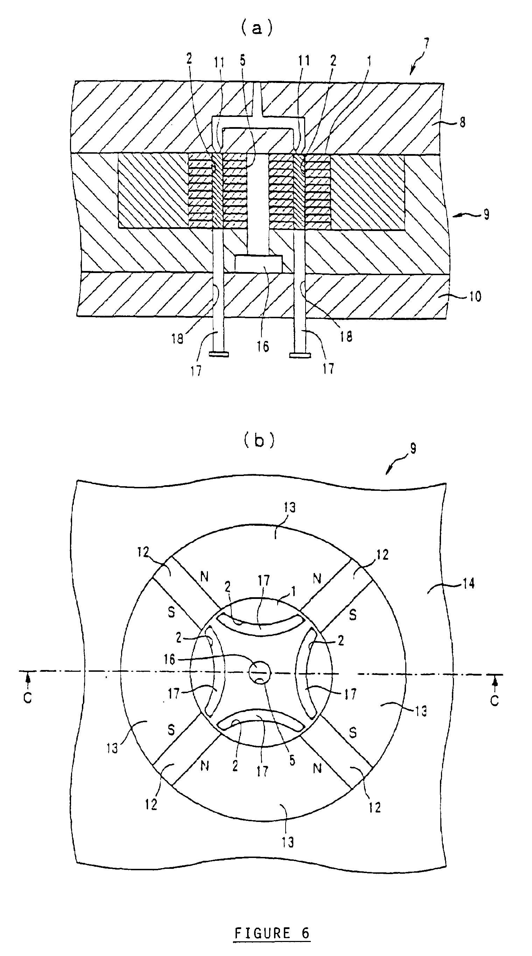

Fig. 6 is a view showing a fifth embodiment of the embedded magnet type rotor, showing, like Fig. 2, a metallic die for use in manufacturing the embedded magnet type rotor; (a) is a sectional view, and (b) is a plan view, with the upper die removed.

As shown in Fig. 6(a), the arrangement of this embodiment is different from those of the foregoing embodiments in that instead of a recessed portion provided in the rotor core 1 or the shaft 19, the slits 2 are utilized as recessed portions, and ejector pins 17 are used which are slidable in the slits 2.

With the construction of this embodiment as described above, the procedure of filling the resinous magnet 3 in the slits 2 is different from those of the foregoing embodiments, which will be described in the following.

First, as shown in Fig. 6(b), the core pin 16 is inserted in the shaft hole 5 of the rotor core 1; the ejector pins 1 are inserted in the slits 2 of the rotor core 1 to the upper ends; and as shown in Fig. 6(a), the rotor core 1 is loaded on the intermediate die 9, with the ends of the arcuate slits 2 directed toward the permanent magnets 12 of the metallic mold 7.

The ejector pins 17 are inserted in the slits in this way, so that rotation of the rotor core 1 can be prevented, and alignment of the slits 2 and the gates 11 can be achieved.

After the upper die 8 is placed on the top of the intermediate die 9, the resinous magnet 3 is injected into slits 2 of the rotor core 1 from the gates 11 of the upper die 8 while magnetically orientated by the permanent magnets 12 of the metallic mold 7, and the ejector pins 17 are moved downward in response to the amount of resinous magnet injected. As a result of the ejector pins being moved downward in association with injection of the resinous magnet 3, pressure inside the slits 2 can be decreased and thus a function of drawing the resinous magnet 3 from the gates 11 of the upper die 8 can be effected, so that injection pressure of the resinous magnet 3 can be kept low to prevent deformation of the slits 2, and the resinous magnet 3 can be filled in the slits 2 almost perfectly without void, resulting in a decreased defective rate.

Then, the movement of the ejector pins 17 is stopped with their tips left in the slits; after the resinous magnet 3 injected into the slits 2 has been solidified, the upper die 8 is removed from the top of the intermediate die 9; and then the solidified resinous magnets 3 are pushed up with the ejector pins 17 to take out the rotor core 1 from the intermediate die 9. In this case, since the contact areas of the ejector pins 17 with the solidified resinous magnets 3 are sufficiently large, the ejector pins 17 rarely cut into, or leave their marks on, the contact surface of the solidified resinous magnets 3.

As a result of the resinous magnet being magnetically orientated with the ejector pins 17 inserted in the slits 2, rotation of the rotor core 1 within the metallic mold 7 can be prevented, so that the resinous magnet 3 can be filled in the slits 2 without trouble, and the resinous magnet 3 filled in the slits 2 can be orientated reliably, providing a decreased defective rate.

While in the foregoing embodiments has been shown examples of the embedded magnet type rotor, this invention is not intended to limit the kind of the rotor core 1, and the shape or the position of the fitting sections.

For example, in the foregoing embodiments, an example is shown in which a recessed portion 4 is provided in the rotor core 1, running from one end to the other end thereof, but it may be one running from one end of the rotor core 1 to the middle thereof.

Also, an example is shown in which a projection 15 is provided in the metallic mold 7, corresponding to a recess 4 provided in the rotor core 1, but the projection may be provided on the metallic mold 7 if engageable with the recess in the rotor 1.

Further, an example is shown in which a recessed portion 4 is provided on the rotor core 1 side, and a projecting portion 15 on the metallic mold 7 side, but conversely, the projecting portion may be provided on the rotor core 1 side, and the recessed portion on the metallic mold 7 side.

Furthermore, although an example is shown in which anisotropic resinous magnet 3 is filled in the slits 2 of the rotor core 1 while magnetically orientated, isotropic resinous magnet 3 may be filled without orientation, in which case, although no rotation force due to orientating magnetic field is produced, the resinous magnet may be used as a means of aligning the slits 2 and the gates 11 and also as a means of stopping rotation in a process of magnetization.

Further, although an example is shown in which slits 2 are provided in the rotor core 1, one for each pole, arrangements of the foregoing embodiments are not intended to limit the number of the slits 2, and a plurality of layers of slits may be provided.

Furthermore, although an example is shown in which slits are formed on the shape of an arc, the shape of the slits 2 is not limited, and it may be, for example, rectangular.

Yet further, although in the foregoing embodiments, an embedded permanent magnet type metallic mold is used as an orientating metallic mold, a magnetized coil type metallic mold may be used in which orientating magnetic field is generated by electromagnets.

Although the types of a rotor core fitting section engageable with a manufacturing device fitting section described in separated embodiments, the respective rotor core fitting sections engageable with the respective manufacturing device fitting sections can be combined with each other. For example, the recess 4 and the projecting portion 15 as shown in Figs. 1 and 2 can be combined with the grooves 4a and the ribs 15a as shown in Fig. 3 within one embodiment. Furthermore, other combinations of two or more embodiments mentioned above are possible.

As described above, the embedded magnet type rotor is an embedded magnet type rotor made by a process in which resinous magnet is filled in slits provided in a rotor core, wherein a rotor core side fitting section engageable with a manufacturing device side fitting section provided in a manufacturing device for use in orientating or magnetizing process of the resinous magnet, is provided, so that the rotor core side fitting section can be engaged with the manufacturing device side fitting section, preventing rotation of the rotor core within the manufacturing device.

Also, in the filling method, ejector pins slidable along the inner surfaces of spaces to be filled are inserted in the spaces to their injection mouths, so that no displacement of the injection mouths is produced, and injection material can be filled in the spaces to be filled, without trouble. Further, the ejector pins can be moved in the direction of retraction in association with injection of the injection material, to thereby decrease pressure inside the die for a function of drawing the resin from the injection mouths, so that injection pressure of the resin can be kept low, preventing deformation of the die, and the resin can be filled in the die almost perfectly without void, resulting in an increased filling efficiency.

According to at least one embodiment described above the embedded magnet type rotor is made by a process in which resinous magnet is filled in slits provided in a rotor core, wherein in an inside circumferential surface of a shaft hole formed in said rotor core is provided a rotor core side fitting section engageable with a manufacturing device side fitting section formed in a manufacturing device for use in an orientating or a magnetizing process of said resinous magnet.

In addition, the embedded magnet type rotor according to a further embodiment is made by a process in which resinous magnet is filled in slits provided in a rotor core, wherein in an outside circumferential surface of said rotor core is provided a rotor core side fitting section engageable with a manufacturing device side fitting section formed in a manufacturing device for use in an orientating or a magnetizing process of said resinous magnet.

In the embodiments mentioned above, it is possible that a recessed or a projecting portion may be provided as the rotor core side fitting section. As for a recessed portion, a groove may be provided running from one end of the rotor core to the middle thereof or running from one end to the other end of the rotor core. When a recessed portion is provided as the rotor core side fitting section, the manufacturing device side fitting section may be provided with a projecting portion engageable with the recessed portion of the rotor core, for example, a rib extending from one end of the rotor core to the middle thereof or extending from one end to the other end of the rotor core, corresponding to the shape of the groove of the rotor core, or a projection adapted to be protruded within the groove of the rotor core.

Conversely, a projecting portion may be provided as the rotor core side fitting section, and a recessed portion as the manufacturing device side fitting section.

Further, the embedded magnet type rotor according to a further embodiment is made by a process in which resinous magnet is filled in slits provided in a rotor core, wherein in at least one of end faces of said rotor core is provided a rotor core side fitting section engageable with a manufacturing device side fitting section formed in a manufacturing device for use in an orientating or a magnetizing process of said resinous magnet.

In the embodiments mentioned above, the rotor core side fitting section is engaged with the manufacturing device side fitting section, so that rotation of the rotor core within the manufacturing device can be prevented. Therefore, the resinous magnet can be filled in the slits without trouble, and the resinous magnet can be orientated and magnetized reliably, resulting in a decreased defective rate.

In the embodiments mentioned above, it is possible that a recessed or a projecting portion may be provided as the rotor core side fitting section. As for a recessed portion, a hole may be provided, or a groove may be provided running from the shaft hole of the rotor core to the outside circumference thereof. When a recessed portion is provided as the rotor core side fitting section, the manufacturing device side fitting section may be provided with a projecting portion engageable with the recessed portion of the rotor core, for example, a projection, or a rib extending from the shaft hole of the rotor core to the outside circumference thereof. Alternatively, the groove may be provided as the rotor core side fitting section, and the projection projecting within the groove, as the manufacturing device side fitting section. Further, by utilizing the slits provided in the rotor core, a projecting portions engageable with the slits may be provided on the manufacturing device side.

Furthermore, conversely, a projecting portion may be provided as the rotor core side fitting section, and a recessed portion as the manufacturing side fitting section.

Furthermore, the embedded magnet type rotor according to a further embodiment is made by a process in which resinous magnet is filled in slits provided in a rotor core, wherein said rotor core is provided with a shaft, and in at least one end of said shaft is provided a rotor core side fitting section engageable with a manufacturing device side fitting section formed in a manufacturing device for use in an orientating or a magnetizing process of said resinous magnet.

In the embodiment mentioned above, the shaft side fitting section of a shaft provided in the rotor core is engaged with the manufacturing device side fitting section, so that rotation of the rotor core within the manufacturing device can be prevented. Therefore, the resinous magnet can be filled in the slits without trouble, as in the other embodiments, and the resinous magnet can be orientated and magnetized reliably, resulting in a decreased defective rate.

An embodiment described above teaches a method on filling resinous magnet in slits provided in a rotor core, wherein said resinous magnet is filled in said slits, with ejector pins inserted in said slits. The resinous magnet can be filled in the slits, with ejector pins inserted in the slits of the rotor core, so that rotation of the rotor core within the manufacturing device can be prevented. Therefore, the resinous magnet can be filled in the slits without trouble, as in the other embodiments, and the resinous magnet can be orientated reliably, resulting in a decreased defective rate.

The ejector pin may have any shape, for example, a bar-like one, or have an outside circumference the same as the shape of the inside circumference of the slit.

The tips of the ejector pins may be inserted in the slits shallowly, or to the middle thereof, or deeply to the injection mouths of the slits. When the tips of the ejector pins are inserted in the slits to the middle thereof, or to the injection mouths of the slits at which the resinous magnet is injected, the ejector pins may be actively drawn out, or automatically retracted by injection pressure of the resinous magnet.

The embodiment described above teaches a method on filling resinous magnet in slits provided in a rotor core, wherein after ejector pins slidable along the inner surfaces of spaces to be filled, have been inserted in said spaces to the injection mouths thereof, injection material is injected from said injection mouths, and said ejector pins are moved in the direction of retraction in association with injection of the injection material. The ejector pins are slidable along the inner surfaces of the spaces to be filled, and are inserted in the spaces to the injection mouths thereof, so that no displacement of the mouths is produced, and the injection material can be filled in the spaces to be filled, without trouble.

In addition, the ejector pins can be moved in the direction of retraction in association with injection of the injection material, to thereby decrease pressure inside the die for a function of drawing the resin from the injection mouths, so that injection pressure of the resin can be kept low, preventing deformation of the die, and the resin can be filled in the die almost perfectly without void, resulting in an increased filling efficiency.

The embodiments described above teaches an embedded magnet type rotor with a rotor core 1 having slits 2 filled with resinous magnet 3. Said rotor core 1 is provided a rotor core fitting section 4,4a,4b,4c engageable with a manufacturing device fitting section 15,15a,15b,15c formed in a manufacturing device 7-10,16 for use in an orientating and/or a magnetizing process of said resinous magnet 3.

Said rotor core 1 is provided with a shaft hole 5 and an inside circumferential surface of said shaft hole 5 is provided with said rotor core fitting section 4 engageable with the manufacturing device fitting section 15 formed in the manufacturing device 7-10, 16. Additionally or alternatively, an outside circumferential surface of said rotor core 1 is provided with said rotor core fitting section 4a engageable with the manufacturing device fitting section 15a formed in the manufacturing device 7-10,16. Additionally or alternatively, at least one of end faces of said rotor core 1 is provided with said rotor core fitting section 4b engageable with the manufacturing device fitting section 15b formed in the manufacturing device 7-10,16. Additionally or alternatively said rotor core 1 is provided with a shaft 19 and at least one end of said shaft 19 is provided with said rotor core fitting section 4c engageable with the manufacturing device fitting section (15c) formed in the manufacturing device 7-10,16.

Said rotor core fitting section is at least one recess 4 extending along the inside circumferential surface of said shaft hole 5 and said manufacturing device fitting section is at least one projection 15 extending along a core pin 16 of the manufacturing device being inserted into the shaft hole 5 of the rotor core 1 during manufacturing process. Additionally or alternatively said rotor core fitting section is at least one groove 4a extending along the outside circumferential surface of said rotor core 1 and said manufacturing device fitting section 15a is at least one rib 15a extending along an inside circumferential surface of a die 9 of the manufacturing device and being inserted into the groove 4a of the rotor core 1 during manufacturing process. Additionally or alternatively said rotor core side fitting section is at least one hole 4b provided in at least one end face of said rotor core 1 and said manufacturing device fitting section is at least one projection 15b provided on a surface of a die 9 of the manufacturing device and being inserted into the hole 4b of the rotor core 1 during manufacturing process. Additionally or alternatively said rotor core fitting section is at least one groove 4c provided on at least one end the shaft 19 of the rotor core 1 and said manufacturing device fitting section is at least one rib 15c provided on a surface of a die 9 of the manufacturing device and being inserted into the groove 4c of the shaft 19 during manufacturing process.

The embodiments described above teaches also a mold device for making an embedded magnet type rotor with a rotor core 1 having slits 2 filled with resinous magnet 3. A manufacturing device fitting means 15,15a,15b,15c,17,18 is formed in a manufacturing device 7-10,16 of said mold device engageable with fitting means 2,4,4a,4b,4c of the rotor core 1 for use in an orientating and/or a magnetizing process of said resinous magnet 3.

Said manufacturing device fitting means 15 is engageable with the fitting means 4 of the rotor core 1 provided on an inside circumferential surface of shaft hole 5 of the rotor core 1. Additionally or alternatively said manufacturing device fitting means 15a is engageable with the fitting means 4a of the rotor core 1 provided on an outside circumferential surface of said rotor core 1. Additionally or alternatively said manufacturing device fitting means 15b is engageable with the fitting means 4b of the rotor core 1 provided on at least one of end faces of said rotor core 1. Additionally or alternatively said manufacturing device fitting means 15c is engageable with the fitting means 4c of the rotor core 1 provided on a shaft 19 of the rotor core 1.

Said manufacturing device fitting means is at least one projection 15 extending along a core pin 16 of the manufacturing device and the said fitting means of the rotor core 1 is at least one recess 4 extending along the inside circumferential surface of said shaft hole 5 and said projection of the core pin 16 of the manufacturing device is inserted into the recess 4 of the shaft hole 5 of the rotor core 1 during manufacturing process. Additionally or alternatively said manufacturing device fitting means is at least one rib 15a extending along an inside circumferential surface of a die 9 of the manufacturing device and said fitting means of the rotor core 1 is at least one groove 4a extending along the outside circumferential surface of said rotor core 1 and said rib 15a is inserted into the groove 4a of the rotor core 1 during manufacturing process. Additionally or alternatively said manufacturing device fitting means is at least one projection 15b provided on a surface of a die 9 of the manufacturing device and fitting means of the rotor core 1 is at least one hole 4b provided in at least one end face of said rotor core 1 and said projection 15b is inserted into the hole 4b of the rotor core 1 during manufacturing process. Additionally or alternatively said manufacturing device fitting means is at least one rib 15c provided on a surface of a die 9 of the manufacturing device and said fitting means of the rotor core 1 is at least one groove 4c provided on at least one end the shaft 19 of the rotor core 1 and said rib 15c is inserted into the groove 4c of the shaft 19 during manufacturing process.

According to an embodiment, said manufacturing device fitting means comprises at least one pin 17 slidably received in a guide opening 18 of the manufacturing device 9, 10. Said pin 17 is insertable into at least one slit 2 of the rotor core 1 serving as the fitting means of the rotor core 1 and said pin 17 is removable from said slit 2 in association with injection of with resinous magnet 3 into said slit 2.

From the description mentioned above a method of making an embedded magnet type rotor with a rotor core 1 having slits 2 filled with resinous magnet 3 by a mold device can be taken, wherein resinous magnet 3 is filled in the slits 2 provided in the rotor core 1, and at least one pin 17 is inserted in at least one slit 2 when said resinous magnet 3 is filled in.

Said method further comprises inserting said pin 17 slidable into a slit 2, injecting resinous magnet 3 into said slit 2 by an injection mouth, retracting said pin 17 from the slit 2 in association with injection of the resinous magnet 3. Furthermore said method comprises moving said pin 17 in direction to said slit 2 after said resinous magnet 3 injected into said slit 2 is solidified in order to eject the rotor core 1 from said mold device.

## Claims

1. An embedded magnet type rotor with a rotor core (1) having slits (2) filled with resinous magnet (3), wherein said rotor core (1) is provided a rotor core fitting section (4,4a,4b,4c) engageable with a manufacturing device fitting section (15,15a,15b,15c) formed in a manufacturing device (7-10,16) for use in an orientating and/or a magnetizing process of said resinous magnet (3).

2. An embedded magnet type rotor according to claim 1, **characterized in that** said rotor core (1) is provided with a shaft hole (5) and an inside circumferential surface of said shaft hole (5) is provided with said rotor core fitting section (4) engageable with the manufacturing device fitting section (15) formed in the manufacturing device (7-10, 16) and/or an outside circumferential surface of said rotor core (1) is provided with said rotor core fitting section (4a) engageable with the manufacturing device fitting section (15a) formed in the manufacturing device (7-10,16) and/or at least one of end faces of said rotor core (1) is provided with said rotor core fitting section (4b) engageable with the manufacturing device fitting section (15b) formed in the manufacturing device (7-10,16) and/or said rotor core (1) is provided with a shaft (19) and at least one end of said shaft (19) is provided with said rotor core fitting section (4c) engageable with the manufacturing device fitting section (15c) formed in the manufacturing device (7-10,16).

3. An embedded magnet type rotor according to claim 2, **characterized in that** said rotor core fitting section is at least one recess (4) extending along the inside circumferential surface of said shaft hole (5) and said manufacturing device fitting section is at least one projection (15) extending along a core pin (16) of the manufacturing device being inserted into the shaft hole (5) of the rotor core (1) during manufacturing process and/or said rotor core fitting section is at least one groove (4a) extending along the outside circumferential surface of said rotor core (1) and said manufacturing device fitting section (15a) is at least one rib (15a) extending along an inside circumferential surface of a die (9) of the manufacturing device and being inserted into the groove (4a) of the rotor core (1) during manufacturing process and/or said rotor core side fitting section is at least one hole (4b) provided in at least one end face of said rotor core (1) and said manufacturing device fitting section is at least one projection (15b) provided on a surface of an die (9) of the manufacturing device and being inserted into the hole (4b) of the rotor core (1) during manufacturing process and/or said rotor core fitting section is at least one groove (4c) provided on at least one end the shaft (19) of the rotor core (1) and said manufacturing device fitting section is at least one rib (15c) provided on a surface of an die (9) of the manufacturing device and being inserted into the groove (4c) of the shaft (19) during manufacturing process.

4. A mold device for making an embedded magnet type rotor with a rotor core (1) having slits (2) filled with resinous magnet (3), wherein a manufacturing device fitting means (15,15a,15b,15c,17,18) is formed in a manufacturing device (7-10,16) of said mold device engageable with fitting means (2,4,4a,4b,4c) of the rotor core (1) for use in an orientating and/or a magnetizing process of said resinous magnet (3).

5. A mold device according to claim 4, **characterized in that** said manufacturing device fitting means (15) is engageable with the fitting means (4) of the rotor core (1) provided on an inside circumferential surface of shaft hole (5) of the rotor core (1) and/or said manufacturing device fitting means (15a) is engageable with the fitting means (4a) of the rotor core (1) provided on an outside circumferential surface of said rotor core (1) and/or said manufacturing device fitting means (15b) is engageable with the fitting means (4b) of the rotor core (1) provided on at least one of end faces of said rotor core (1) and/or said manufacturing device fitting means (15c) is engageable with the fitting means (4c) of the rotor core (1) provided on a shaft (19) of the rotor core (1).

6. A mold device according to claim 5, **characterized in that** said manufacturing device fitting means is at least one projection (15) extending along a core pin (16) of the manufacturing device and the said fitting means of the rotor core (1) is at least one recess (4) extending along the inside circumferential surface of said shaft hole (5) and said projection of the core pin (16) of the manufacturing device is inserted into the recess (4) of the shaft hole (5) of the rotor core (1) during manufacturing process and/or said manufacturing device fitting means is at least one rib (15a) extending along an inside circumferential surface of an die (9) of the manufacturing device and said fitting means of the rotor core (1) is at least one groove (4a) extending along the outside circumferential surface of said rotor core (1) and said rib (15a) is inserted into the groove (4a) of the rotor core (1) during manufacturing process and/or said manufacturing device fitting means is at least one projection (15b) provided on a surface of a die (9) of the manufacturing device and fitting means of the rotor core (1) is at least one hole (4b) provided in at least one end face of said rotor core (1) and said projection (15b) is inserted into the hole (4b) of the rotor core (1) during manufacturing process and/or said manufacturing device fitting means is at least one rib (15c) provided on a surface of a die (9) of the manufacturing device and said fitting means of the rotor core (1) is at least one groove (4c) provided on at least one end the shaft (19) of the rotor core (1) and said rib (15c) is inserted into the groove (4c) of the shaft (19) during manufacturing process.

7. A mold device according to at least one of the claims 4 to 6, **characterized in that** said manufacturing device fitting means comprises at least one pin (17) slidably received in a guide opening (18) of the manufacturing device (9, 10), wherein said pin (17) insertable into at least one slit (2) of the rotor core (1) serving as the fitting means of the rotor core (1) and said pin (17) is removable from said slit (2) in association with injection of with resinous magnet (3) into said slit (2).

8. A method of making an embedded magnet type rotor with a rotor core (1) having slits (2) filled with resinous magnet (3) by a mold device, wherein resinous magnet (3) is filled in the slits (2) provided in the rotor core (1), and at least one pin (17) is inserted in at least one slit (2) when said resinous magnet (3) is filled in.

9. A method of making an embedded magnet type rotor according to claim 8, **characterized by** inserting said pin (17) slidable into a slit (2), injecting resinous magnet (3) into said slit (2) by an injection mouth, retracting said pin (17) from the slit (2) in association with injection of the resinous magnet (3).

10. A method of making an embedded magnet type rotor according to claim 9, **characterized by** moving said pin (17) in direction to said slit (2) after said resinous magnet (3) injected into said slit (2) is solidified in order to eject the rotor core (1) from said mold device.
